Europäisches Patentamt

European Patent Office

Office européen des brevets

(11) Numéro de publication: **0 457 651 B1**

## (12) FASCICULE DE BREVET EUROPEEN

(45) Date de publication du fascicule du brevet: **09.08.95** (51) Int. Cl.⁶: **C03C 17/23**

(21) Numéro de dépôt: **91401191.1**

(22) Date de dépôt: **07.05.91**

(54) **Produit à substrat en verre portant une couche conductrice transparente contenant du zinc et de l'indium et procédé pour l'obtenir.**

(30) Priorité: **16.05.90 FR 9006097**

(43) Date de publication de la demande:
**21.11.91 Bulletin 91/47**

(45) Mention de la délivrance du brevet:
**09.08.95 Bulletin 95/32**

(84) Etats contractants désignés:
**BE CH DE ES FR GB IT LI LU NL SE**

(56) Documents cités:
**EP-A- 0 131 827**
**DE-A- 2 854 213**
**FR-A- 2 631 330**

**PATENT ABSTRACTS OF JAPAN vol. 12, no. 326 (C-525) 05 septembre 1988,& JP-A-63 089657 (ASAHI GLASS CO) 20 avril 1988,**

(73) Titulaire: **SAINT-GOBAIN VITRAGE**
**"Les Miroirs",**
**18 Avenue d'Alsace**
**F-92400 Courbevoie (FR)**

(72) Inventeur: **Vilato, Pablo**
**79, rue Didot**
**F-75014 Paris (FR)**
Inventeur: **Bruneel, Dominique**
**8, rue Augustin Thierry**
**F-75019 Paris (FR)**
Inventeur: **Testulat, Bertrand**
**7, rue du Docteur Louvet**
**F-95200 Sarcelles (FR)**
Inventeur: **Oudard, Jean-François**
**34, Grande Rue**
**F-60310 Thiescourt (FR)**
Inventeur: **Grimal, Jean-Michel**
**69, avenue Maurice Berteaux**
**F-78300 Poissy (FR)**

(74) Mandataire: **Le Vaguerèse, Sylvain Jacques**
**et al**
**SAINT-GOBAIN RECHERCHE**
**39, quai Lucien Lefranc**
**F-93300 Aubervilliers Cédex (FR)**

**Description**

La présente invention concerne un produit comprenant un substrat en verre portant une couche mince conductrice d'oxyde métallique présentant particulièrement des propriétés de basse émissivité, de faible résistivité et de transparence.

La présente invention concerne aussi un procédé pour la fabrication d'un tel produit, en particulier un procédé de pyrolyse de poudres de composés métalliques.

Des vitrages destinés aux bâtiments sont avantageusement constitués en verre silico-sodo-calcique clair qui présente des facteurs de transmission lumineuse et énergétique élevés, par exemple proches de 90 % pour une épaisseur de 4 mm. Pour améliorer le confort des utilisateurs, notamment en hiver, en réduisant la perte énergétique due à une fuite de calories de l'intérieur du bâtiment vers l'extérieur, il est connu de constituer un vitrage en recouvrant une face d'une feuille de verre d'une couche conductrice d'oxyde métallique, dite de basse émissivité, qui accroît le taux de réflexion du vitrage dans l'infra-rouge.

Un tel vitrage revêtu d'une telle couche peut être associé à une autre feuille de verre non revêtue, emprisonnant entre elles un espace d'air, pour constituer un vitrage double isolant.

La basse émissivité de la couche conductrice est liée à une faible résistivité de la couche. Des feuilles de verre ayant ce type de couche peuvent donc aussi être utilisés comme vitrages chauffants, particulièrement dans le domaine de l'automobile, pour former des pare-brise et des lunettes arrière.

Des vitrages portant des revêtements conducteurs transparents et présentant des propriétés de basse émissivité et de faible résistivité sont connus. Ils peuvent être constitués par exemple d'un substrat en verre et d'une mince couche d'oxyde métallique, telle qu'une couche d'oxyde d'étain dopé par exemple au fluor ou bien une couche d'oxyde d'indium dopé à l'étain (ITO).

Ces couches peuvent être obtenues par différents procédés, procédés sous vide (évaporation thermique, pulvérisation cathodique, éventuellement avec magnétron), ou par pyrolyse de composés métalliques sous forme de solution, de poudre ou de vapeur projetés sur le substrat chauffé. Dans ce cas, les composés, au contact du substrat de verre chauffé à température élevée, mais inférieure à la température de ramollissement du verre, se décomposent et s'oxydent pour former l'oxyde métallique.

Les couches d'oxyde d'étain dopé au fluor et les couches d'ITO sont avantageusement obtenues par pyrolyse de poudres.

On peut fabriquer les couches d'oxyde d'étain dopé au fluor à partir d'oxyde de dibutylétain en poudre et d'acide fluorhydrique anhydre gazeux, comme il est décrit dans le brevet français 2 380 997, à partir de difluorure de dibutylétain (DBTF) éventuellement en mélange avec du DBTO comme décrit dans le document EP-A-178 956 ou EP-A-039 256. En ce qui concerne les couches d'ITO, on peut les obtenir par exemple à partir de formiate d'indium et d'un composé de l'étain comme le DBTO comme décrit dans le document EP-A-192 009.

On a pu ainsi obtenir, par pyrolyse de poudres, des couches conductrices d'oxyde d'étain dopé au fluor d'une épaisseur de 180 nm et présentant, à la température ordinaire, une émissivité de 0,35 et une résistivité de $10.10^{-4}$ $\Omega$.cm environ.

On a aussi pu fabriquer, par pyrolyse de poudres, des couches d'ITO d'une épaisseur de 180 nm et ayant, à la température ordinaire, une émissivité de 0,11 et une résistivité de $2.10^{-4}$ $\Omega$.cm.

Bien que ces couches d'oxyde d'étain dopé au fluor présentent des propriétés intéressantes appropriées pour certaines utilisations, on cherche cependant encore des couches présentant une émissivité plus faible.

Les couches d'ITO présentent une émissivité plus faible que celle des couches d'oxyde d'étain dopé au fluor, mais, pour obtenir cette faible émissivité, on doit soumettre les couches d'ITO à un traitement thermique réducteur, ce qui augmente le prix de revient de ces couches.

Il est par ailleurs connu de la demande de brevet européen EP-A-0 131 827 la fabrication d'un revêtement à base d'oxyde métallique conducteur sur un substrat de verre par immersion de celui-ci dans une solution de composés métalliques hydrolysables, puis séchage et traitement thermique. Le revêtement obtenu est à base d'oxyde d'indium et peut contenir au moins un autre oxyde métallique comme l'oxyde de zinc.

On a donc cherché à préparer des produits comprenant un substrat en verre portant de nouvelles couches conductrices qui soient transparentes et présentent, notamment, une faible émissivité, éventuellement sans nécessiter de traitement thermique réducteur.

Le produit, selon l'invention, comprend un substrat de verre et une couche conductrice transparente d'oxyde métallique contenant de l'indium et du zinc, **caractérisé en ce que** la couche est constituée principalement d'oxyde mixte de zinc et d'indium dont 20 à 32% en poids atomique d'indium, valeurs déterminées par analyse par microsonde électronique, et présente une résistivité inférieure ou égale à

$10.10^{-4}$ $\Omega$.cm.

Un procédé selon l'invention pour fabriquer un tel produit consiste à projeter sur le substrat en verre, porté à une température inférieure à la température de ramollissement du verre, une suspension dans un gaz vecteur d'un mélange de poudres, thermiquement décomposables à la température du substrat, formées d'un composé organique du zinc en quantité de 80 à 20 % en poids et d'un composé organique de l'indium en quantité de 20 à 80 % en poids, les poudres se pyrolysant au contact du substrat en formant une couche d'oxyde mixte de zinc et d'indium.

Les couches obtenues selon l'invention sont appelées ici "couches d'oxyde mixte de zinc et d'indium" car on pense que ces couches sont formées essentiellement de phases mixtes ZnInO, comme $Zn_2In_2O_5$, $Zn_5In_2O_8$ et/ou $Zn_7In_2O_{10}$. Les spectres de diffraction des rayons X de ces couches montrent qu'elles sont mal cristallisées. Cependant, elles comprennent des porteurs de charge dont le nombre et la mobilité sont tels que l'on peut obtenir des couches conductrices ayant des résistivités dans les gammes des $10^{-3}$-$10^{-4}$ $\Omega$.cm. En particulier, les couches qui présentent les résistivités les plus faibles contiennent de 20 à 32 % atomique d'indium. Ces résistivités sont inférieures à $10.10^{-4}$ $\Omega$.cm et en particulier, inférieures à $7.10^{-4}$ $\Omega$.cm environ.

Les produits selon l'invention, comprenant un substrat de verre et une telle couche présentent en outre une transmission lumineuse supérieure à 70 %.

Ces couches conductrices de faible résistivité, peuvent être obtenues, comme indiqué précédemment, par un procédé de pyrolyse des composés de l'indium et du zinc en poudre au contact d'un substrat chauffé à haute température.

On a trouvé que le pourcentage atomique d'indium dans la couche, et par conséquent la résistivité de ces couches, dépendait d'un certain nombre de facteurs dont la température du substrat, la pureté des composés de départ et la granulométrie de ces composés.

Selon l'invention, en plus des constituants principaux que sont les oxydes de zinc et d'indium, il peut être avantageux d'introduire dans la couche de l'oxyde d'étain en faible proportion. La présence d'oxyde d'étain est susceptible de favoriser la création de "microdomaines" d'ITO améliorant les performances de la couche.

Dans ce mode de réalisation, la teneur en étain ne dépasse pas normalement 5 % en pourcentage atomique dans la couche finale et se situe, de préférence, à moins de 2 %, des teneurs supérieures à 5 % ne se traduisant pas par une amélioration supplémentaire.

L'introduction de l'étain dans la couche est obtenue par les moyens usuels. En particulier, dans les techniques de pyrolyse de poudre, on utilise avantageusement le DBTO. Pour parvenir aux teneurs en étain énoncées ci-dessus, le DBTO est introduit dans le mélange de poudre en proportions pondérales qui ne sont pas supérieures à environ 10 %.

Le substrat, notamment du verre, est chauffé à une température inférieure à sa température de ramollissement. Généralement, il est chauffé entre 500°C et 700°C et de préférence de 600°C à 650°C, températures auxquelles on obtient des couches conductrices présentant les résistivités les plus faibles, comme il sera montré à l'exemple 1 et au tableau I.

Le substrat peut être formé d'un verre silico-sodo-calcique utilisé classiquement pour les vitrages automobiles et pour les bâtiments. Il peut s'agir d'un verre clair, c'est-à-dire non coloré, présentant une transmission lumineuse importante, par exemple supérieure à 90 % sous une épaisseur de 4 mm. Il peut s'agir aussi, d'un verre coloré dans sa masse apte à procurer un confort d'été accru pour les passagers du véhicule ou du local équipé de tels verres, du fait de sa transmission énergétique réduite. D'une manière générale, pour des vitrages pour automobiles par exemple, on choisit le verre, constituant le substrat, pour respecter les réglementations, c'est-à-dire un ensemble verre et couche ayant une transmission lumineuse (TL) d'au moins 75 % ou 70 % suivant les législations.

Comme verre coloré, on peut utiliser du verre dit "TSA" contenant $Fe_2O_3$ dans des proportions pondérales de l'ordre de 0,55 à 0,62 %, FeO pour environ 0,11 à 0,16 %, ce qui conduit à un rapport $Fe^{2+}$/Fe de l'ordre de 0,19 à 0,25, CoO pour moins de 12 ppm et même de préférence pour moins de 10 ppm.

Il en résulte des propriétés, par exemple pour une épaisseur de 3,85 mm, de transmission lumineuse ($T_L$) élevée voisine de 78 %, (illuminant D65), un facteur énergétique de transmission ($T_E$) relativement bas et voisin de 60, ce qui conduit à un rapport $T_L/T_E$ de l'ordre de 1,30.

On peut aussi utiliser comme verre coloré, en particulier lorsque la réglementation n'impose qu'une transmission lumineuse de 70 %, un verre un peu plus coloré que le "TSA", mais présentant par contre une transmission lumineuse un peu plus faible, à savoir un verre "$TSA^{2+}$".

Ce verre "$TSA^{2+}$" est coloré par les mêmes oxydes que précédemment mais dans des proportions légèrement différentes.

Ainsi les proportions d'oxydes métalliques sont les suivantes :

$Fe_2O_3$ : approximativement compris entre 0,75 et 0,90 %

FeO : approximativement compris entre 0,15 et 0,22 % soit $Fe^{2+}/Fe$ = 0,20 environ

CoO : inférieur à 17 ppm et même de préférence inférieur à 10 ppm

Il en résulte pour ce verre "$TSA^{2+}$", en 3,85 mm d'épaisseur les propriétés suivantes :

$T_L$ : de l'ordre de 72 %

$T_E$ : de l'ordre de 50 %

Ce qui conduit à un rapport $T_L/T_E$ de l'ordre de 1,40 ou 1,50.

Comme composés organiques du zinc, décomposables aux températures du substrat, utilisables dans l'invention, on peut citer par exemple du diéthylzinc, de l'acétate de zinc et de l'acétylacétonate de zinc. Comme composés organiques de l'indium, on peut citer l'acétylacétonate d'indium et le formiate d'indium. On préfère utiliser l'acétate de zinc et le formiate d'indium qui permettent un rendement de pyrolyse élevé et l'obtention de couches ayant des résistivités plus faibles.

En particulier, du formiate d'indium, approprié pour l'invention, est décrit dans les demandes de brevet européen EP-A-192 009 et EP-A-324 664.

Les composés de l'indium et du zinc utilisés dans l'invention sont avantageusement purs à au moins 99%. En effet, on s'est aperçu, toutes les autres conditions de formation des couches étant identiques, qu'on pouvait obtenir des couches de résistivité moindre si les composés de départ étaient d'une pureté plus grande, comme il sera montré à l'exemple 2.

Les composés organiques de l'indium et du zinc, en poudre, utiles dans l'invention, peuvent avoir une granulométrie pratiquement identique, par exemple elles peuvent avoir un $d_{90}$ inférieur à 21 $\mu$m ; cependant, pour obtenir des couches de résistivité faible, on a trouvé qu'il est préférable que les composés de l'indium aient une granulométrie inférieure à celle des composés du zinc. Ainsi, les poudres de composés de l'indium ont, de préférence, un $d_{90}$ inférieur à 21 $\mu$m et les poudres décomposés du zinc un $d_{90}$ supérieur à 70 $\mu$m. Comme il est bien connu, le terme "$d_{90}$" signifie que 90 % des particules ont un diamètre inférieur à la valeur indiquée. Les poudres ne doivent cependant pas être trop fines pour ne pas diminuer le rendement de pyrolyse qui dépend de la quantité des composés et de leur granulométrie.

Les couches conductrices selon l'invention sont obtenues à partir d'un mélange de ces poudres contenant de 20 à 80 % en poids de composé de l'indium. On a remarqué que des quantités de composé d'indium inférieures à 20 % et supérieures à 80 % ne permettent pas d'obtenir des couches d'oxyde mixte de zinc et d'indium, et en outre, les résistivités de ces couches augmentent. Des quantités de composés d'indium, utiles pour obtenir des couches présentant des résistivités inférieures à $10.10^{-4}$ $\Omega$.cm, sont de préférence comprises entre 35 et 70 % en poids. Les quantités de poudres utilisées sont ajustées pour que le rendement de pyrolyse, mentionné précédemment soit le plus élevé possible.

Pour former sur un substrat de verre une couche conductrice selon l'invention, par pyrolyse de poudres, on peut utiliser différents dispositifs connus, tels que ceux décrits dans les demandes de brevet européen EP-A-6 064, 125 153, 130 919, 188 962, 189 709, 191 258, 329 519.

D'une manière générale, on utilise une buse de distribution, située au dessus du substrat de verre chaud à traiter, en particulier un ruban de verre en mouvement tel que du verre flotté. Le ruban de verre peut défiler entre 5 et 25 m/mn. Cette buse comprend une cavité s'étendant sur toute sa longueur et se termine par une fente. La cavité est alimentée, d'une façon homogène, sur toute sa longueur, en poudre ou en mélange de poudres, en suspension dans un gaz porteur. La poudre sort de la fente de la buse et se pyrolyse sur la surface chaude du verre en mouvement.

Les exemples suivants non limitatifs illustrent l'invention. Dans ces exemples, pour la réalisation des couches conductrices selon l'invention, on a utilisé de l'air comme gaz vecteur. Le substrat était du verre flotté défilant à une vitesse de 5 m/mn. Les couches citées dans les exemples ont des épaisseurs similaires ($\approx$ 400 nm), ce qui permet de comparer les mesures d'émissivité et de résistivité.

Les composés sont broyés avec le broyeur "Alpine 160 Z".

La résistivité des couches est mesurée par l'équation $\rho = R_\square \times e$ où la résistance par carré $R_\square$ est mesurée par la méthode des 4 pointes et l'épaisseur e est mesurée à partir des pics d'interférence du spectre de réflexion.

## EXEMPLE 1

On forme des couches conductrices d'oxyde mixte de zinc et d'indium A à D, à partir d'acétate de zinc et de formiate d'indium, sur des substrats en verre sodo-calcique du type flotté, chauffés à des températures différentes, de 500 °C à 680 °C.

Pour chaque température du substrat, on a formé des couches à partir de mélanges de poudres contenant des quantités croissantes de formiate d'indium et on a mesuré la résistivité de chacune des couches. On a ainsi déterminé, pour chaque cas, la quantité de poudres nécessaire pour obtenir la couche ayant la plus faible résistivité pour une température donnée.

On a porté au tableau Ia les caractéristiques des poudres d'acétate de zinc et de formiate d'indium ainsi que leur quantité permettant d'obtenir la couche de résistivité la plus faible. L'acétate de zinc et le formiate d'indium sont broyés à raison de 3.500 tr/mn pour obtenir des poudres ayant une granulométrie similaire (le $d_{90}$ est de 21 $\mu$m environ pour l'acétate de zinc et de 15 $\mu$m environ pour le formiate d'indium) ; on a aussi indiqué au tableau Ib les caractéristiques des couches (nombre de porteurs de charge, mobilité des porteurs de charges, résistivité).

On peut voir que les résistivités sont du même ordre de grandeur, les valeurs les plus faibles étant cependant obtenues à des températures de 600°C et 650°C. On constate en outre que, lorsque la température du substrat augmente, une moins grande quantité de formiate d'indium est nécessaire pour obtenir les couches ayant les plus faibles résistivités.

Les tableaux Ia et Ib sont donnés en annexe.

## EXEMPLE 2

On a formé une couche conductrice E d'oxyde mixte de zinc et d'indium à partir de formiate d'indium et d'acétate de zinc, dans les mêmes conditions que la couche B de l'exemple 1, mais on a utilisé de l'acétate de zinc présentant une pureté plus grande (99 % au lieu de 98 % pour la couche B).

On a porté aux tableaux IIa et IIb les caractéristiques des poudres et des couches B de l'exemple 1 et E de l'exemple 2.

On peut voir qu'en utilisant de l'acétate de zinc de plus grande pureté, on obtient une couche E de résistivité plus faible que celle de la couche B, obtenue dans les mêmes conditions, mais à partir d'acétate de zinc pur à 98 % seulement.

Les tableaux IIa et IIb sont donnés en annexe.

## EXEMPLE 3

Cet exemple concerne l'obtention, à 600°C, d'une couche F conductrice selon l'invention en modifiant la granulométrie de l'acétate de zinc, de pureté de 99 %.

Le formiate d'indium est, comme pour la couche E, formé de poudre, broyé à raison de 3.500 tr/mn pour obtenir une granulométrie dont le $d_{90}$ est de 15 $\mu$m environ.

L'acétate de zinc est broyé à raison de 2.000 tr/mn pour obtenir une poudre dont le $d_{90}$ est de 74 $\mu$m environ.

Aux tableaux IIIa et IIIb, donnés en annexe, sont indiquées les caractéristiques des poudres et celles des couches obtenues. Les quantités de composés de départ, acétate de zinc et formiate d'indium, sont celles qui donnent, pour chaque type de broyage, les couches ayant les résistivités les plus faibles.

On peut constater qu'en utilisant de l'acétate de zinc pur à 99 % sous forme de poudre de grains plus gros que dans le cas de la couche E, on obtient une couche dont la résistivité est encore améliorée.

## EXEMPLE 4

Cet exemple concerne des couches formées à 600°C, à partir d'acétate de zinc pur à 99 % broyé à 2.000 tr/mn pour obtenir une poudre ayant un $d_{90}$ de 74 $\mu$m environ et de formiate d'indium de granulométrie différente pour chaque couche.

La couche F ( comme dans l'exemple 3 ) est formée à partir de formiate d'indium broyé à 3.500 tr/mn. Des couches G et H sont formées à partir de formiate d'indium broyé pour obtenir de la poudre de plus en plus fine (couche G, poudre de $d_{90}$ = 11 $\mu$m environ et couche H, poudre de $d_{90}$ de 8 $\mu$m environ ).

Aux tableaux IVa et IVb, donnés en annexe, sont indiquées les caractéristiques des poudres utilisées et celles des couches F, G, H obtenues. Les quantités de composés de départ sont celles qui permettent d'obtenir les couches de résistivités les plus faibles, pour chaque type de broyage.

On constate que l'on obtient la couche de résistivité la plus faible avec du formiate d'indium en poudre la plus fine et les couches F, G et H ont été obtenues avec des épaisseurs respectives de 420 nm, 360 nm et 385 nm.

Les produits obtenus avec ces couches ont une transmission lumineuse de 73 %, 76 % et 70 %, respectivement. A ces épaisseurs, les couches F, G et H ont respectivement une émissivité de 0,18, 0,18 et 0,15 qui les rendent particulièrement utiles pour former des vitrages bas émissifs.

## EXEMPLE 5

On a formé une couche conductrice dans les mêmes conditions que la couche F (exemples 3 et 4), mais on n'a utilisé que 20 % en poids de formiate d'indium.

Dans ces conditions, on obtient une couche d'oxyde mixte de zinc et d'indium contenant 10 à 11 % en poids d'indium atomique. On pense que ce taux d'indium atomique dans la couche correspond à la valeur limite inférieure pour obtenir un oxyde mixte de zinc et d'indium. Une telle couche présente une résistivité de 19 x $10^{-4}$ $\Omega$.cm et une émissivité de 0,35 pour une épaisseur de 440 nm.

En augmentant la quantité de formiate d'indium jusqu'à 45 % en poids (couche F), obtenant ainsi un meilleur rendement de pyrolyse, compte tenu des granulométries des poudres, (acétate de zinc broyé à 3.500 tr/mn et formiate d'indium broyé à 2.000 tr/mn), on peut obtenir une couche contenant un pourcentage plus élevé d'indium atomique dans la couche et une résistivité et une émissivité plus faibles.

## EXEMPLE 6

Dans cet exemple, on forme une couche conductrice (J) sur un substrat de verre chauffé à 650°C dont les caractéristiques sont indiquées aux tableaux Va et Vb, donnés en annexe.

Si l'on compare cette couche (J) avec la couche (F) de l'exemple 4, qui sont toutes deux obtenues à partir des mêmes poudres (acétate de zinc broyé à 2.000 tr/mn et formiate d'indium broyé à 3.500 tr/mn) mais à des températures différentes (650°C et 600°C), on peut constater que l'on obtient des couches de résistivités voisines à partir de quantités différentes de composés, le pourcentage de formiate d'indium pour la couche (J) formée à 650°C étant inférieur à celui utilisé dans la couche (F) formée à 600°C.

Des exemples précédents, on constate que les couches de résistivités les plus faibles (4,4 $10^{-4}$ et 5,8 x $10^{-4}$ $\Omega$.cm) sont obtenues pour des pourcentages en poids d'indium atomique de 28 à 31 %.

## EXEMPLE 7

Une couche conductrice (K) est préparée à partir d'un mélange de poudres d'acétate de zinc, de formiate d'indium et de DBTO.

Le mélange est constitué à partir des proportions respectives en poids de 59,8 % d'acétate de zinc, 38,2 % de formiate d'indium et de 2 % de DBTO.

La distribution granulométrique est, pour chacun des constituants, la suivante en micromètres :

|          | AcZn | $InFo_3$ | DBTO |
|----------|------|----------|------|
| $d_{10}$ | 6,4  | 2,5      | 3,4  |
| $d_{50}$ | 36,1 | 4,9      | 10,4 |
| $d_{90}$ | 190  | 7,3      | 20,7 |

La pyrolyse est conduite à 600°C et l'on constitue une couche de 520 nm. L'émissivité du vitrage est E = 0,145 (transmission lumineuse supérieure à 70%) et la résistivité est de 5,4 x $10^{-4}$ $\Omega$.cm.

Les couches décrites précédemment ont les résistivités indiquées sans traitement thermique en atmosphère réductrice. Il semble qu'un tel traitement n'améliore pas nécessairement la résistivité des couches.

Les produits selon l'invention sont utilisables dans tout domaine où ses propriétés optiques et/ou électriques sont nécessaires, par exemple dans le domaine du bâtiment et de l'automobile, mais aussi dans des domaines particuliers comme des dispositifs opto-électroniques tels que les cellules photovoltaïques, les dispositifs d'affichage à cristaux liquides.

En particulier, les produits selon l'invention sont utiles comme vitrages chauffants, par exemple comme parebrise d'automobile tels que ceux décrits notamment aux demandes de brevet français 88/10138 (n° de publication FR-B-2 634 753), 88/10139 (n° de publication FR-B-2 634 754) et 88/10140 (n° de publication FR-B-2 634 755) déposées le 27 juillet 1988 et à la demande de brevet français 89/12170 (n° de publication FR-B-2 652 037) déposée le 19 septembre 1989. Ils peuvent être ainsi utilisés pour former des vitrages feuilletés en étant associés à une feuille de polymère, par exemple du polyuréthane. Les produits selon l'invention peuvent aussi être associés à une feuille de polymère comme le polyvinylbutyral, polychlorure de vinyle ou polyuréthane et à une autre plaque de verre, éventuellement identique, la feuille de polymère servant d'intercalaire entre les deux plaques de verre. Les amenées de courant peuvent être des clinquants métalliques, par exemple en cuivre et/ou des bandes sérigraphiées à l'argent, et sont placées le long des bords supérieur et inférieur du vitrage et en contact avec la couche conductrice.

Les produits selon l'invention sont aussi utilisables comme vitrages bas émissifs, particulièrement pour le bâtiment dans lesquels le substrat de verre a une épaisseur par exemple de 4 mm. Les produits selon l'invention sont par exemple, associés à une autre feuille de verre emprisonnant entre eux un espace d'air pour constituer un vitrage double isolant. Des couches conductrices selon l'invention particulièrement appropriées pour ces vitrages bas émissifs sont celles qui contiennent de 20 % à 32 % environ en poids d'indium atomique, par exemple la couche G décrite précédemment qui contient 31 % en poids d'indium atomique et présente une résistivité de $5,8.10^{-4}\,\Omega.cm$ et une émissivité de 0,18 pour une épaisseur de 360 nm ou la couche H qui comprend 29 % en poids d'indium atomique et présente une résistivité de $4,4.10^{-4}\,\Omega.cm$ et une émissivité de 0,15 pour une épaisseur de 380 nm.

Les produits selon l'invention peuvent comprendre en outre une couche intermédiaire entre le substrat de verre et la couche conductrice. Cette couche intermédiaire peut être une couche de silice, d'oxynitrure de silicium, d'oxycarbure de silicium ou toute autre couche qui constitue une couche barrière aux ions sodium ou bien qui, par suite de son indice de réfraction et de son épaisseur, constitue avec la couche conductrice un ensemble de couleur neutre.

### TABLEAU Ia

| Couches | t (°C) subst | formiate d'indium | | | | | acétate de zinc | | | | |
|---------|--------------|------|------|------|------|------|------|------|------|------|------|
| | | pur. % | % pds | broy. tr/mn | gran. ($\mu$m) | | pur. % | % pds | broy. tr/mn | gran. ($\mu$m) | |
| A | 500 | 99,99 | 85 | 3500 | $d_{10}$ $d_{50}$ $d_{90}$ | 4 8 15 | 98 | 15 | 3500 | $d_{10}$ $d_{50}$ $d_{90}$ | 3 8 21 |
| B | 600 | 99,99 | 70 | 3500 | id. | | 98 | 30 | 3500 | id. | |
| C | 650 | 99,99 | 65 | 3500 | id. | | 98 | 35 | 3500 | id. | |
| D | 680 | 99,99 | 50 | 3500 | id. | | 98 | 50 | 3500 | id. | |

### TABLEAU Ib

| Couches | In % at. | $\rho$ ($\Omega$.cm) | N (cm$^{-3}$) | $\mu$ cm$^2$v$^{-1}$S$^{-1}$ |
|---------|----------|-----------|-----------|-----------|
| A | 28 | $13 \times 10^{-4}$ | $0,92 \times 10^{20}$ | 49 |
| B | 26 | $11 \times 10^{-4}$ | $1,2 \times 10^{20}$ | 51 |
| C | 28 | $10 \times 10^{-4}$ | $1,4 \times 10^{20}$ | 45 |
| D | 29 | $\approx 12 \times 10^{-4}$ | $1,0 \times 10^{20}$ | $\approx 49$ |

### TABLEAU IIa

| Couches | t (°C) subst | formiate d'indium | | | | | acétate de zinc | | | | |
|---------|--------------|------|------|------|------|------|------|------|------|------|------|
| | | pur. % | % pds | broy. tr/mn | gran. ($\mu$m) | | pur. % | % pds | broy. tr/mn | gran. ($\mu$m) | |
| B | 600 | 99,99 | 70 | 3500 | $d_{10}$ $d_{50}$ $d_{90}$ | 4 8 15 | 98 | 30 | 3500 | $d_{10}$ $d_{50}$ $d_{90}$ | 3 8 21 |
| E | 600 | 99,99 | 70 | 3500 | id. | | 99 | 30 | 3500 | id. | |

### TABLEAU IIb

| Couches | In % at. | $\rho$ ($\Omega$.cm) | N (cm$^{-3}$) | $\mu$ cm$^2$v$^{-1}$S$^{-1}$ |
|---|---|---|---|---|
| B | 26 | 11 x 10$^{-4}$ | 1,2 x 10$^{20}$ | 51 |
| E | 29 | 6-7 x 10$^{-4}$ | 1,6 x 10$^{20}$ | 53 |

### TABLEAU IIIa

| Couches | t (°C) subst | formiate d'indium | | | | | acétate de zinc | | | | |
|---|---|---|---|---|---|---|---|---|---|---|---|
| | | pur. % | % pds | broy. tr/mn | gran. ($\mu$m) | | pur. % | % pds | broy. tr/mn | gran. ($\mu$m) | |
| E | 600 | 99,99 | 70 | 3500 | $d_{10}$<br>$d_{50}$<br>$d_{90}$ | 4<br>8<br>15 | 99 | 30 | 3500 | $d_{10}$<br>$d_{50}$<br>$d_{90}$ | 3<br>8<br>21 |
| F | 600 | 99,99 | 45 | 3500 | id. | | 99 | 55 | 2000 | $d_{10}$<br>$d_{50}$<br>$d_{90}$ | 6<br>25<br>74 |

### TABLEAU IIIb

| Couches | In % at. | $\rho$ ($\Omega$.cm) | N (cm$^{-3}$) | $\mu$ cm$^2$v$^{-1}$S$^{-1}$ |
|---|---|---|---|---|
| E | 29 | 6-7 x 10$^{-4}$ | 1,6 x 10$^{20}$ | 53 |
| F | 28 | 5,8 x 10$^{-4}$ | 1,6 x 10$^{20}$ | 66 |

### TABLEAU IVa

| Couches | t (°C) subst | formiate d'indium | | | | | acétate de zinc | | | | |
|---|---|---|---|---|---|---|---|---|---|---|---|
| | | pur. % | % pds | broy. tr/mn | gran. ($\mu$m) | | pur. % | % pds | broy. tr/mn | gran. ($\mu$m) | |
| F | 600 | 99,99 | 45 | 3500 | $d_{10}$<br>$d_{50}$<br>$d_{90}$ | 4<br>8<br>15 | 99 | 55 | 2000 | $d_{10}$<br>$d_{50}$<br>$d_{90}$ | 6<br>25<br>74 |
| G | 600 | 99,99 | 50 | 4500 | $d_{10}$<br>$d_{50}$<br>$d_{90}$ | 3<br>7<br>11 | 99 | 50 | 2000 | id. | |
| H | 600 | 99,99 | 55 | 4800 x 2 | $d_{10}$<br>$d_{50}$<br>$d_{90}$ | 3<br>6<br>8 | 99 | 45 | 2000 | id. | |

TABLEAU IVb

| Couches | In % at. | Epais nm | $\rho$ ($\Omega$.cm) | N (cm$^{-3}$) | $T_L$ D$_{65}$ | $\mu$ cm$^2$v$^{-1}$S$^{-1}$ | Emissivi. |
|---------|----------|----------|----------------------|---------------|----------------|------------------------------|-----------|
| F | 28 | 420 | 5,8x10$^{-4}$ | 1,5x10$^{20}$ | 73 % | 66 | 0,18 |
| G | 31 | 360 | 5,8x10$^{-4}$ | 1,3x10$^{20}$ | 76 % | 76 | 0,18 |
| H | 29 | 380 | 4,4x10$^{-4}$ | 2,4x10$^{20}$ | 70 % | 58 | 0,15 |

TABLEAU Va

| Couches | t ($^\circ$C) subst | formiate d'indium | | | | | acétate de zinc | | | | |
|---------|---------------------|-------------------|--------|-------------|---------------|---|-----------------|--------|-------------|---------------|----|
| | | pur. % | % pds | broy. tr/mn | gran. ($\mu$m) | | pur. % | % pds | broy. tr/mn | gran. ($\mu$m) | |
| J | 650 | 99,99 | 35 | 3500 | $d_{10}$ $d_{50}$ $d_{90}$ | 4 8 15 | 99 | 65 | 2000 | $d_{10}$ $d_{50}$ $d_{90}$ | 4 25 74 |
| F | 600 | 99,99 | 45 | 3500 | id. | | 99 | 55 | 2000 | id. | |

TABLEAU Vb

| Couches | In % at. | $\rho$ ($\Omega$.cm) | N (cm$^{-3}$) | $\mu$ cm$^2$v$^{-1}$S$^{-1}$ | Emissivité | Epais. (nm) |
|---------|----------|----------------------|---------------|------------------------------|------------|-------------|
| J | 22 | 6,3x10$^{-4}$ | 1,7x10$^{20}$ | 62 | 0,22 | 440 |
| F | 28 | 5,8x10$^{-4}$ | 1,6x10$^{20}$ | 66 | 0,18 | 420 |

## Revendications

1. Vitrage comprenant un substrat en verre et une couche conductrice transparente d'oxyde métallique contenant de l'indium et du zinc, **caractérisé en ce que** la couche est constituée principalement d'oxyde mixte de zinc et d'indium dont 20 à 32% en poids atomique d'indium, valeurs déterminées par analyse par microsonde électronique, et présente une résistivité inférieure ou égale à 10.10$^{-4}$ $\Omega$.cm.

2. Vitrage conforme à la revendication 1, **caractérisé en ce que** la couche contient entre 28 et 31% en poids atomique d'indium.

3. Vitrage selon la revendication 1 ou la revendication 2, **caractérisé en ce que** la couche d'oxyde mixte renferme également de l'oxyde d'étain en une proportion atomique qui n'est pas supérieure à 5%.

4. Vitrage conforme à l'une des revendications 1 à 3, **caractérisé en ce qu'**il présente une transmission lumineuse supérieure ou égale à 70%, en utilisant l'illuminant D$_{65}$.

5. Vitrage conforme à l'une des revendications précédentes, **caractérisé en ce que** le substrat est un verre sodo-calcique clair ou coloré.

6. Vitrage conforme à l'une des revendications précédentes, **caractérisé en ce qu'**il a une transmission lumineuse de 76%, et la couche conductrice a une résistivité de 5,8.10$^{-4}$ $\Omega$.cm et une émissivité de 0,18 pour une épaisseur de 360 nm.

7. Vitrage conforme à l'une des revendications précédentes, **caractérisé en ce qu'**il a une transmission lumineuse de 70%, et la couche conductrice a une résistivité de 4,4.10$^{-4}$ $\Omega$.cm et une émissivité de 0,15 pour une épaisseur de 385 nm.

**8.** Procédé de fabrication d'un vitrage selon l'une des revendications précédentes et comprenant un substrat en verre et une couche conductrice transparente d'oxyde métallique, obtenue par projection d'une suspension dans un gaz vecteur, de composés organiques métalliques pulvérulents et pyrolyse de ces composés au contact de la surface du substrat chauffé à une température inférieure à la température de ramollissement du verre, **caractérisé en ce qu'**on projette, sur ce substrat, un mélange sous forme de poudres thermiquement décomposables à la température du substrat, contenant de 20 à 80% en poids d'un composé organique de l'indium, les poudres se pyrolysant au contact du substrat en formant une couche d'oxyde mixte de zinc et d'indium dont 20 à 32% en poids atomique d'indium.

**9.** Procédé conforme à la revendication 8, **caractérisé en ce que** le composé organique du zinc est l'acétate de zinc.

**10.** Procédé conformé à l'une des revendications 8 ou 9, **caractérisé en ce que** le composé organique de l'indium est du formiate d'indium.

**11.** Procédé conforme à l'une des revendications 8 à 10, **caractérisé en ce que** le mélange pulvérulent contient de 35 à 70% de formiate d'indium.

**12.** Procédé selon l'une des revendications 8 à 11 dans lequel on introduit un composé organique de l'étain en proportion pondérale ne dépassant pas 10% de l'ensemble du mélange.

**13.** Procédé selon la revendication 12 dans lequel le composé d'étain est le DBTO.

**14.** Procédé conforme à l'une des revendications 8 à 13, **caractérisé en ce que** le substrat est porté à une température comprise entre 500°C et 700°C, et de préférence entre 600 et 650°C.

**15.** Procédé conforme à l'une des revendications 8 à 14, **caractérisé en ce que** les composés en poudre sont purs à au moins 99%.

**16.** Procédé conforme à l'une quelconque des revendications 8 à 15, **caractérisé en ce que** les composés présentent pratiquement la même granulométrie.

**17.** Procédé conforme à la revendication 16, **caractérisé en ce que** le $d_{90}$ des poudres est inférieur à 21 $\mu$m.

**18.** Procédé conforme à l'une des revendications 8 à 17, **caractérisé en ce que** le composé d'indium a une granulométrie inférieure à celle du composé du zinc.

**19.** Procédé conforme à la revendication 18, **caractérisé en ce que** la poudre de composé d'indium a un $d_{90}$ inférieur à 21 $\mu$m et la poudre de composé de zinc a un $d_{90}$ supérieur à 70 $\mu$m.

**20.** Utilisation d'un vitrage conforme à l'une des revendications 1 à 7 comme vitrage double isolant basémissif, comprenant le substrat recouvert de la couche d'oxyde mixte et une autre feuille de verre séparée par un espace d'air.

**21.** Utilisation conforme à la revendication 20, dans laquelle le substrat de verre a une épaisseur de 4 mm.

**22.** Utilisation d'un vitrage conforme à l'une des revendications 1 à 7 comme vitrage feuilleté chauffant comprenant une plaque de verre constituée par le substrat recouvert de la couche d'oxyde mixte et une feuille de polymère du type polyuréthane adhérant à la couche conductrice dudit produit, et des moyens d'amenée du courant disposés au contact de la couche conductrice et le long des bords supérieur et inférieur du vitrage.

**23.** Utilisation d'un vitrage conforme à l'une quelconque des revendications 1 à 7, comme vitrage feuilleté chauffant à deux plaques de verre, dont l'une au moins est constituée par le substrat recouvert de la couche d'oxyde mixte, ces plaques étant séparées par une feuille de polymère du type polyvinylbutyral, polychlorure de vinyle et polyuréthane et comportant des moyens d'amenée du courant disposés au contact de la couche conductrice et le long des bords supérieur et inférieur du vitrage.

**Claims**

1.  Pane comprising a substrate of glass and a transparent conducting film of metallic oxide containing indium and zinc, characterized in that the film is composed principally of mixed zinc and indium oxide containing from 20 to 32% by atomic weight of indium, the values being determined by analysis by electronic microprobe, and has a resistivity less than or equal to $10 \times 10^{-4}$ $\Omega$.cm.

2.  Pane according to Claim 1, characterized in that the film contains from 28 to 31% by atomic weight of indium.

3.  Pane according to Claim 1 or 2, characterized in that the film of mixed oxide contains also tin oxide in an atomic proportion which is not greater than 5%.

4.  Pane according to one of Claims 1 to 3, characterized in that it has a light transmission greater than or equal to 70%, using illuminant $D_{65}$.

5.  Pane according to one of the preceding Claims, characterized in that the substrate is a clear or coloured sodo-calcic glass.

6.  Pane according to one of the preceding Claims, characterized in that it has a light transmission of 76%, and the conducting film has a resistivity of $5.8 \times 10^{-4}$ $\Omega$.cm and an emissivity of 0.18 for a thickness of 360 nm.

7.  Pane according to one of the preceding Claims, characterized in that it has a light transmission of 70%, and the conducting film has a resistivity of $4.4 \times 10^{-4}$ $\Omega$.cm and an emissivity of 0.15 for a thickness of 385 nm.

8.  Process for the production of a pane according to one of the preceding Claims and comprising a substrate of glass and a transparent conducting film of metallic oxide, produced by the projection of a suspension, in a carrier gas, of metallic organic compounds in powder form and pyrolysis of these compounds on contact with the surface of the substrate, heated to a temperature lower than the softening temperature of the glass, characterized in that there is projected, onto this substrate, a mixture in the form of powders that are thermally decomposable at the temperature of the substrate, containing from 20 to 80% by weight of an organic compound of indium, the powders pyrolyzing on contact with the substrate and forming a film of mixed zinc and indium oxide, containing 20 to 32% by atomic weight of indium.

9.  Process according to Claim 8, characterized in that the organic compound of zinc is zinc acetate.

10. Process according to one of Claims 8 or 9, characterized in that the organic compound of indium is indium formate.

11. Process according to one of Claims 8 to 10, characterized in that the pulverulent mixture contains from 35 to 70% of indium formate.

12. Process according to one of Claims 8 to 11, in which an organic compound of tin is introduced in a proportion by weight not exceeding 10% of the total of the mixture.

13. Process according to Claim 12, in which the tin compound is DBTO.

14. Process according to one of Claims 8 to 13, characterized in that the substrate is raised to a temperature of from 500°C to 700°C, and preferably from 600 to 650°C.

15. Process according to one of Claims 8 to 14, characterized in that the compounds in powder form are at least 99% pure.

**16.** Process according to any one of Claims 8 to 15, characterized in that the compounds have virtually the same granulometry.

**17.** Process according to Claim 16, characterized in that the $d_{90}$ of the powders is less than 21 $\mu$m.

**18.** Process according to one of Claims 8 to 17, characterized in that the indium compound has a granulometry smaller than that of the zinc compound.

**19.** Process according to Claim 18, characterized in that the indium compound powder has a $d_{90}$ less than 21 $\mu$m and the zinc compound powder has a $d_{90}$ greater than 70 $\mu$m.

**20.** Use of a pane according to one of Claims 1 to 7 as a low-emission double insulating glazing, comprising the substrate covered with the mixed oxide film and another glass sheet separated by an air gap.

**21.** Use according to Claim 20, in which the glass substrate has a thickness of 4 mm.

**22.** Use of a pane according to one of Claims 1 to 7 as a heating laminated pane, comprising a glass plate constituted of the substrate covered with the mixed oxide film and a sheet of polymer of the polyurethane type, adhering to the conducting film of said product, and electricity supply means disposed in contact with the conducting film and along the upper and lower edges of the pane.

**23.** Use of a pane according to any one of Claims 1 to 7 as heating laminated pane comprising two glass plates, of which at least one is constituted of the substrate covered with the mixed oxide film, these plates being separated by a sheet of polymer of the polyvinyl butyral, polyvinyl chloride or polyurethane type and comprising electricity supply means disposed in contact with the conducting film and along the upper and lower edges of the pane.

**Patentansprüche**

**1.** Verglasung, umfassend ein Glassubstrat und eine durchsichtige leitfähige indium- und zinkhaltige Metalloxidschicht, **dadurch gekennzeichnet, daß** die Schicht im wesentlichen aus Zink-Indium-Mischoxid, davon 20 bis 32 Atomgew.% Indium, besteht, wobei diese Werte durch Analyse mittels elektronischer Mikrosonde bestimmt werden, und einen spezifischen Widerstand von höchstens 10 • $10^{-4}$ $\Omega \cdot$cm aufweist.

**2.** Verglasung nach Anspruch 1, **dadurch gekennzeichnet, daß** die Schicht zwischen 28 und 31 Atomgewichts% Indium enthält.

**3.** Verglasung nach Anspruch 1 oder 2, **dadurch gekennzeichnet, daß** die Mischoxidschicht auch Zinnoxid in einem Atomgewichtsanteil enthält, der 5 % nicht übersteigt.

**4.** Verglasung nach einem der Ansprüche 1 bis 3, **dadurch gekennzeichnet, daß** sie bei Verwendung des Beleuchtungskörpers $D_{65}$ eine Lichttransmission von wenigstens 70 % aufweist.

**5.** Verglasung nach einem der vorhergehenden Ansprüche, **dadurch gekennzeichnet, daß** das Substrat ein klares oder gefärbtes Kalk-Natron-Glas ist.

**6.** Verglasung nach einem der vorhergehenden Ansprüche, **dadurch gekennzeichnet, daß** sie eine Lichttransmission von 76 % und die leitfähige Schicht bei einer Dicke von 360 nm einen spezifischen Widerstand von 5,8 • $10^{-4}$ $\Omega \cdot$cm und einen Emissionskoeffizienten von 0,18 besitzt.

**7.** Verglasung nach einem der vorhergehenden Ansprüche, **dadurch gekennzeichnet, daß** sie eine Lichttransmission von 70 % und die leitfähige Schicht bei einer Dicke von 385 nm einen spezifischen Widerstand von 4,4 • $10^{-4}$ $\Omega \cdot$cm und einen Emissionskoeffizienten von 0,15 besitzt.

**8.** Verfahren zur Herstellung einer Verglasung nach einem der vorhergehenden Ansprüche, welche ein Glassubstrat und eine durchsichtige leitfähige Metalloxidschicht umfaßt, die durch Aufspritzen von in einem Trägergas suspendierten pulverförmigen metallorganischen Verbindungen und Pyrolyse dieser Verbindungen im Kontakt mit der Oberfläche des auf eine Temperatur von unterhalb der Erweichungstemperatur des Glases erhitzten Substrates hergestellt ist, **dadurch gekennzeichnet, daß** auf dieses Substrat ein Gemisch in Form bei der Substrattemperatur thermisch zersetzbarer Pulver gespritzt wird, das 20 bis 80 Gew.% einer indiumorganischen Verbindung enthält, wobei sich die Pulver im Kontakt mit dem Substrat pyrolytisch zersetzen und eine Schicht aus Zink-Indium-Mischoxid mit 20 bis 32 Atomgewichts% Indium bilden.

9. Verfahren nach Anspruch 8, **dadurch gekennzeichnet, daß** die zinkorganische Verbindung Zinkacetat ist.

10. Verfahren nach Anspruch 8 oder 9, **dadurch gekennzeichnet, daß** die indiumorganische Verbindung Indiumformiat ist.

11. Verfahren nach einem der Ansprüche 8 bis 10, **dadurch gekennzeichnet, daß** das pulverförmige Gemisch 35 bis 70 % Indiumformiat enthält.

12. Verfahren nach einem der Ansprüche 8 bis 11, in welches eine zinnorganische Verbindung mit einem Gewichtsanteil eingeführt wird, der 10 % des gesamten Gemischs nicht übersteigt.

13. Verfahren nach Anspruch 12, in welchem die Zinnverbindung Dibutylzinnoxid ist.

14. Verfahren nach einem der Ansprüche 8 bis 13, **dadurch gekennzeichnet, daß** das Substrat auf eine Temperatur von 500 bis 700 °C und vorzugsweise zwischen 600 und 650 °C gebracht wird.

15. Verfahren nach einem der Ansprüche 8 bis 14, **dadurch gekennzeichnet, daß** die pulverförmigen Verbindungen eine mindestens 99%ige Reinheit aufweisen.

16. Verfahren nach einem der Ansprüche 8 bis 15, **dadurch gekennzeichnet, daß** die Verbindungen praktisch dieselbe Korngröße besitzen.

17. Verfahren nach Anspruch 16, **dadurch gekennzeichnet, daß** $d_{90}$ der Pulver unter 21 $\mu$m liegt.

18. Verfahren nach einem der Ansprüche 8 bis 17, **dadurch gekennzeichnet, daß** die Korngröße der Indiumverbindung unter der der Zinkverbindung liegt.

19. Verfahren nach Anspruch 18, **dadurch gekennzeichnet, daß** das Pulver der Indiumverbindung einen $d_{90}$ von unter 21 $\mu$m und das Pulver der Zinkverbindung einen $d_{90}$ von über 70 $\mu$m besitzt.

20. Verwendung einer Verglasung nach einem der Ansprüche 1 bis 7 als Doppelisolierverglasung mit niedrigem Emissionsvermögen, welche das mit der Mischoxidschicht überzogene Substrat und eine weitere Glasscheibe umfaßt, die durch einen Luftzwischenraum voneinander getrennt sind.

21. Verwendung nach Anspruch 20, in welcher das Glassubstrat eine Dicke von 4 mm besitzt.

22. Verwendung einer Verglasung nach einem der Ansprüche 1 bis 7 als beheizbare Verbundverglasung, welche eine Glasscheibe, die aus dem mit der Mischoxidschicht überzogenen Substrat und einer Polymerfolie vom Typ eines Polyurethans, die auf der leitfähigen Schicht dieses Erzeugnisses haftet, besteht und Stromzufuhrmittel umfaßt, die im Kontakt mit der leitfähigen Schicht entlang des oberen und unteren Randes der Verglasung angeordnet sind.

23. Verwendung einer Verglasung nach einem der Ansprüche 1 bis 7 als beheizbare Verbundverglasung mit zwei Glasscheiben, von denen wenigstens eine aus dem mit der Mischoxidschicht überzogenen Substrat besteht, wobei diese Scheiben durch eine Polymerfolie vom Typ des Polyvinylbutyrals, Polyvinylchlorids und Polyurethans voneinander getrennt sind, und Stromzufuhrmittel umfaßt, die im Kontakt mit der leitfähigen Schicht entlang des oberen und unteren Randes der Verglasung angeordnet sind.